# EUROPÄISCHE PATENTSCHRIFT

(11) **EP 3 206 857 B1**
(45) Veröffentlichungstag und Bekanntmachung des Hinweises auf die Patenterteilung: **12.12.2018**
(21) Anmeldenummer: 15778955.3
(22) Anmeldetag: 13.10.2015
(51) Int. Cl.: F25D 23/12, F24C 15/00, A23P 30/20, A23P 30/00, B33Y 10/00, B33Y 30/00, B33Y 40/00, B33Y 80/00

(54) **VERFAHREN ZUM BETREIBEN EINES NAHRUNGSMITTELDRUCKERS, SOWIE ZUGEHÖRIGER NAHRUNGSMITTELDRUCKER UND ZUGEHÖRIGES HAUSHALTSGERÄT**
PROCESS FOR UTILISING A FOOD PRINTER, AS WELL AS A RESPECTIVE FOOD PRINTER AND RESPECTIVE HOUSEHOLD APPLIANCE
PROCÉDÉ POUR L'UTILISATION D'UNE UNE IMPRIMANTE ALIMENTAIRE, ET UNE IMPRIMANTE ALIMENTAIRE CORRÉSPONDANTE ET APPAREIL MÉNAGER CORRÉSPONDANT

(30) Priorität: 16.10.2014 DE 102014220954
(43) Veröffentlichungstag der Anmeldung: 23.08.2017
(73) Patentinhaber: BSH Hausgeräte GmbH, 81739 München (DE)
(72) Erfinder: SCHÜSSLER, Andreas, 81541 München (DE)
(86) Internationale Anmeldenummer: PCT/EP2015/073629
(87) Internationale Veröffentlichungsnummer: WO 2016/059023

(56) Entgegenhaltungen:
- EP-A1- 2 364 593
- WO-A1-02/42950
- WO-A1-2010/151202
- DE-A1-102011 087 777
- US-B1- 6 280 785

## Beschreibung

Die Erfindung betrifft ein Verfahren zum Betreiben eines Nahrungsmitteldruckers, sowie ein Haushaltsgerät, insbesondere Haushaltsbackofen und/oder Haushaltskältegerät, mit einem Nahrungsmitteldrucker, aufweisend eine Lagervorrichtung, die ausgebildet ist, den Nahrungsmitteldrucker in einem Behandlungsraum des Haushaltsgeräts, insbesondere in einem Garraum eines Haushaltsbackofens und/oder in einem Kälteraum eines Haushaltskältegeräts, zu lagern.

Die WO 2002/042950 A1 betrifft eine Einrichtung zur Interaktion mit einem Computersystem. Diese Einrichtung befindet sich an einem Haushaltskühlgerät. Sie umfasst einen Drucker, mit welchem auf einem geeigneten Träger, insbesondere Papier, eine gedruckte. Form erstellt werden kann. Aus dieser gedruckten Form können mittels einer Sensiereinrichtung Anzeigedaten aufgenommen und zur Einrichtung übertragen werden, wodurch ein Benutzer in Interaktion mit dem Computersystem treten kann.

Die DE 10 2011 087 777 A1 betrifft ein Haushaltsgerät mit einer Steuereinrichtung zum Steuern von Betriebsprozessen des Haushaltsgeräts, mit einem internen Kommunikationsbus, mit welchem die Steuereinrichtung zur Kommunikation mit zumindest einer anderen Komponente des Haushaltsgeräts gekoppelt ist, und mit einer USB-Einrichtung mit einem USB-Anschluss, über welchen eine externe Vorrichtung an das Haushaltsgerät anschließbar ist, wobei die USB-Einrichtung an den Kommunikationsbus gekoppelt ist.

Die US 6,280,785 B1 beschreibt ein Verfahren zur Herstellung von dreidimensionalen Nahrungsmittelprodukten. Eine entsprechende Vorrichtung, der Nahrungsmitteldrucker, weist eine in einer Ebene angesteuert bewegliche Düse auf, aus der eine flüssige bis pastöse Nahrungsmittelmasse kontrolliert auf einen Träger austritt, so dass Schicht für Schicht ein dreidimensionales Nahrungsmittelprodukt aufgebaut werden kann. Der Nahrungsmitteldrucker weist dabei eine elektronische Steuerungsvorrichtung auf, welche die Düse gemäß einer computergenerierten Formvorlage ansteuert.

Die WO 2010/151202 A1 beschreibt ein Küchengerät in Art eines Nahrungsmitteldruckers, der ein rohrförmiges Gehäuse mit einer oberen Öffnung aufweist, über die eine Nahrungsmittelmasse und Bindemittel zugeführt werden können. In einem unteren Bereich des Gehäuses ist eine ansteuerbare beweglich Düse angeordnet, über welche die Nahrungsmittelmasse und das Bindemittel tröpfchenweise austritt und aufeinanderliegende Schichten bildet, um ein dreidimensionales Lebensmittelprodukt aufzubauen.

Die Aufgabe der Erfindung ist es, ein Verfahren zum Betreiben eines Nahrungsmitteldruckers, sowie einen zugehörigen Nahrungsmitteldrucker und ein zugehöriges Haushaltsgerät zu schaffen, wodurch dreidimensionale Nahrungsmittelprodukte in hoher Qualität hergestellt werden können.

Die Aufgabe der Erfindung wird gelöst durch ein Verfahren zum Betreiben eines Nahrungsmitteldruckers aufweisend die Schritte:
- Bereitstellen eines Haushaltsgeräts, das zur Behandlung, insbesondere zum Erwärmen, Erhitzen, Kühlen und/oder Gefrieren von Nahrungsmitteln ausgebildet ist und das einen dazu eingerichteten Behandlungsraum für Nahrungsmittel aufweist,
- Ausstatten des Nahrungsmitteldruckers mit einer zu behandelnden Nahrungsmittelmasse,
- Positionieren des Nahrungsmitteldruckers in den Behandlungsraum des Haushaltsgeräts,
- Vorformen eines Nahrungsmittelproduktes aus der Nahrungsmittelmasse durch den Nahrungsmitteldrucker in dem Behandlungsraum,
- Betreiben des Haushaltsgeräts zur Behandlung der Nahrungsmittelmasse und/oder des Nahrungsmittelproduktes während und/oder nachdem das Nahrungsmittelprodukt aus der Nahrungsmittelmasse in dem Behandlungsraum des Haushaltsgeräts durch den Nahrungsmitteldrucker vorgeformt wird/ist.

Ein Nahrungsmitteldrucker, der unter Anderem auch als 3D-Nahrungsmitteldrucker bezeichnet wird, ist eine Vorrichtung, die vom Grundaufbau ähnlich eines Computerdruckers aufgebaut ist, jedoch keine Tinte oder Toner auf Papier aufbringt, sondern Nahrungsmittelmassen auf eine Unterlage, wie beispielsweise einen Teller oder ein Backblech. Dabei wird eine Nahrungsmittelmasse aus einer Austrittsdüse automatisch in einer vorgegebenen Fördermenge je Zeit herausgefördert und die Austrittsdüse innerhalb einer Ebene automatisch verstellt, so dass schichtweise dreidimensionale Körper aus dem Lebensmittel aufgebaut werden. Ein Aufbau dieser Schichten kann computergesteuert erfolgen nach einer rechnergespeicherten dreidimensionalen Formvorlage. Die Fördermenge je Zeit durch die Austrittsdüse und die Verstellung der Austrittsdüse innerhalb der Ebene wird durch eine Steuerungsvorrichtung des Nahrungsmitteldruckers automatisch gesteuert. Die durch die Austrittsdüse geförderte Nahrungsmittelmasse kann eine Flüssigkeit, eine Paste und/oder ein Feststoff sein, beispielsweise pulverförmig oder als Schmelze. Zur Steuerung und Einstellung des Aggregatszustands der Nahrungsmittelmasse und/oder dessen Viskosität, kann die Nahrungsmittelmasse erwärmt oder gekühlt werden.

Bekannt sind Nahrungsmitteldrucker als solche, welche als eigenständige Geräte betrieben werden. Erfindungsgemäß ist es unter anderen Aspekten insbesondere vorgesehen, dass ein erfindungsgemäßer Nahrungsmitteldrucker in einem Behandlungsraum eines anderen Haushaltsgeräts, insbesondere in einem Garraum eines Haushaltsbackofens und/oder in einem Kälteraum eines Haushaltskältegeräts eingebracht und darin betrieben wird. Die als solches bereits vorhandenen Funktionalitäten des Haushaltsgeräts, insbesondere des Haushaltsbackofens und/oder des Haushaltskältegeräts können dabei genutzt werden, um die von dem Nahrungsmitteldrucker behandelte, insbesondere geförderte Nahrungsmittelmasse physikalisch zu beeinflussen, insbesondere thermisch zu beeinflussen, d.h. zu erwärmen, zu kühlen oder durch Mikrowelle oder Wärmestrahlung zu behandeln. Dadurch kann insbesondere der Aufbau der Nahrungsmittelschichten während oder kurz nach der Entstehung beeinflusst werden.

Die Aufgabe der Erfindung wird auch gelöst durch ein Haushaltsgerät, insbesondere Haushaltsbackofen und/oder Haushaltskältegerät, aufweisend einen Behandlungsraum und einen darin mittels einer entsprechend ausgebildeten Lagervorrichtung gelagerten Nahrungsmitteldrucker, sowie eine elektrische Schnittstelle, die ausgebildet ist, den Nahrungsmitteldrucker mit dem Haushaltsgerät elektrisch zu verbinden, derart, dass der Nahrungsmitteldrucker in einer im Behandlungsraum befindlichen Betriebsposition über das Haushaltsgerät mit elektrischer Energie zum Betreiben des Nahrungsmitteldruckers versorgt ist und/oder derart, dass der Nahrungsmitteldrucker in einer im Behandlungsraum befindlichen Betriebsposition über den Haushaltsbackofen und/oder über das Haushaltskältegerät, insbesondere dessen jeweiliger Gerätesteuerung angesteuert ist, wobei das Haushaltsgerät und der Nahrungsmitteldrucker eingerichtet sind zur Durchführung eines erfindungsgemäßen Verfahrens.

Das Haushaltsgerät kann demgemäß ein Haushaltsbackofen, insbesondere ein elektrischer Haushaltsbackofen sein und die Nahrungsmittelmasse und/oder das Nahrungsmittelprodukt kann dabei durch den Haushaltsbackofen auf eine unter der Gartemperatur des Nahrungsmittelprodukts liegende Erwärmungstemperatur erwärmt werden.

Die Nahrungsmittelmasse kann dabei in einem unter die Erwärmungstemperatur und/oder unter die Gartemperatur gekühlten Vorratsraum, insbesondere einem gekühlten Vorratsraum des Nahrungsmitteldruckers bevorratet sein. Indem die Nahrungsmittelmasse in einem unter die Erwärmungstemperatur und/oder unter die Gartemperatur gekühlten Vorratsraum bevorratet ist, wird durch den Betrieb des Haushaltsgeräts, insbesondere des Haushaltsbackofens zumindest im Wesentlichen nur die aus der Austrittsdüse ausgetretene Nahrungsmittelmasse beeinflusst und nicht die im Vorratsraum bevorratete Grundmasse.

Es können mehrere verschiedene Nahrungsmittelmassen in dem Nahrungsmitteldrucker vorgesehen sein. Jede Art von Nahrungsmittelmasse kann beispielsweise in einer Kartusche enthalten sein. Mehrere Kartuschen können ein Magazin in dem Vorratsraum bilden. Der Vorratsraum kann mit einem Deckel versehen sein, der geöffnet und geschlossen werden kann. In einer Offenstellung des Deckels können die Kartuschen ausgetauscht werden, d.h. leere Kartuschen herausgenommen und volle Kartuschen eingesetzt werden. In einer Schließstellung des Deckels kann der Vorratsraum thermisch gegen die Umgebung des Nahrungsmitteldruckers, insbesondere thermisch gegen einen Garraum des Haushaltsbackofens isoliert sein.

In einer alternativen Ausführungsform kann das Haushaltsgerät ein Haushaltskältegerät sein und die Nahrungsmittelmasse und/oder das Nahrungsmittelprodukt durch das Haushaltskältegerät auf eine unter der Umgebungstemperatur liegende Kühltemperatur und/oder Gefriertemperatur gekühlt werden.

Die Nahrungsmittelmasse kann dabei in einem über die Gefriertemperatur und/oder über die Kühltemperatur, insbesondere über die Umgebungstemperatur erwärmten Vorratsraum, insbesondere einem erwärmten Vorratsraum des Nahrungsmitteldruckers bevorratet sein. Indem die Nahrungsmittelmasse dabei in einem über die Gefriertemperatur und/oder über die Kühltemperatur erwärmten Vorratsraum bevorratet ist, wird durch den Betrieb des Haushaltsgeräts, insbesondere des Haushaltskältegeräts zumindest im Wesentlichen nur die aus der Austrittsdüse ausgetretene Nahrungsmittelmasse beeinflusst und nicht die im Vorratsraum bevorratete Grundmasse. Das Haushaltskältegerät kann ein Kühlschrank, ein Gefrierschrank oder ein Kühl-Gefrier-Kombinationsgerät sein. Der Kälteraum kann demgemäß auch ein Gefrierraum sein.

In einer Weiterbildung der Erfindung kann der Nahrungsmitteldrucker eine Lagervorrichtung aufweisen, die ausgebildet ist, den Nahrungsmitteldrucker in einem Behandlungsraum eines Haushaltsgeräts, insbesondere in dem Garraum des Haushaltsbackofens und/oder in dem Kälteraum des Haushaltskältegeräts zu lagern.

Die Lagervorrichtung kann an einem Gehäuse des Lebensmitteldruckers ausgebildet sein. Insbesondere kann die Lagervorrichtung an einer oder mehreren Außenwände des Gehäuses des Lebensmitteldruckers befestigt oder einteilig mit diesen ausgebildet sein. Die Lagervorrichtung kann in einer Ausführungsvariante ausgebildet sein, den Nahrungsmitteldrucker in dem Garraum des Haushaltsbackofens an seitlich gegenüberliegenden Tragmitteln eines Haushaltsbackofens zu lagern, die zur Aufnahme von Backblechen und/oder Einschubrosten ausgebildet sind.

Die Lagervorrichtung kann somit beispielsweise ausgebildet sein, den Nahrungsmitteldrucker in einem Garraum des Haushaltsbackofens an seitlich gegenüberliegenden Tragmitteln des Haushaltsbackofens zu lagern. Die seitlich gegenüberliegenden Tragmittel des Haushaltsbackofens können durch die an sich bekannten Tragmittel gebildet werden, welche nach dem Stand der Technik zur Aufnahme von Backblechen und/oder Einschubrosten ausgebildet sind. Die Tragmittel können beispielsweise an gegenüberliegenden vertikalen Seitenwänden des Garraums ausgebildete Nuten sein. Alternativ können die Tragmittel von in den Garraum vorspringenden separaten Bügeln gebildet werden, welche als separate Bauteile an den gegenüberliegenden vertikalen Seitenwänden des Garraums befestigt sind.

Die Lagervorrichtung kann beispielsweise durch Leisten gebildet werden, die an gegenüberliegenden Seitenwänden des Gehäuses angeordnet sind. Die Leisten können dabei ausgebildet sein, an die Tragmittel des Haushaltsbackofens angebracht, insbesondere in die Nuten eingeschoben oder auf die Bügel aufgeschoben zu werden. Die Lagervorrichtung ermöglicht es somit den Nahrungsmitteldrucker analog eines Backbleches und/oder Einschubrostes in den Garraum einzuschieben. In einer in den Garraum eingeschobenen Position des Nahrungsmitteldrucker kann eine Garraumtür des Haushaltsbackofens geschlossen werden, so dass der Haushaltsbackofen in einer an sich bekannten Weise betrieben werden kann.

Die Lagervorrichtung kann in einer anderen Ausführungsvariante ausgebildet sein, den Nahrungsmitteldrucker in einem Kälteraum eines Haushaltskältegeräts an seitlich gegenüberliegenden Tragmitteln des Haushaltskältegeräts zu lagern, die zur Aufnahme von Kühlgut-Fachböden und/oder Gefrierschubladen ausgebildet sind.

Die Lagervorrichtung kann alternativ oder ergänzend aber auch ausgebildet sein, den Nahrungsmitteldrucker in einem Kälteraum eines Haushaltskältegeräts an seitlich gegenüberliegenden Tragmitteln des Haushaltskältegeräts zu lagern. Die seitlich gegenüberliegenden Tragmittel des Haushaltskältegeräts können durch die an sich bekannten Tragmittel gebildet werden, welche nach dem Stand der Technik zur Aufnahme von Fachböden und/oder Glasplatten ausgebildet sind. Die Tragmittel können beispielsweise an gegenüberliegenden vertikalen Seitenwänden des Kälteraums am Innenbehälter ausgebildete Nuten sein.

Die Lagervorrichtung kann auch hierbei durch Leisten gebildet werden, die an gegenüberliegenden Seitenwänden des Gehäuses angeordnet sind. Die Leisten können dabei ausgebildet sein, an die Tragmittel des Haushaltskältegeräts angebracht, insbesondere in die Nuten eingeschoben zu werden. Die Lagervorrichtung ermöglicht es somit den Nahrungsmitteldrucker analog eines Fachbodens oder einer Glasplatte in den Kälteraum des Haushaltskältegeräts einzuschieben. In einer in den Kälteraum eingeschobenen Position des Nahrungsmitteldrucker kann eine Kältegerätetür des Haushaltskältegeräts geschlossen werden, so dass das Haushaltskältegerät in einer an sich bekannten Weise betrieben werden kann.

In allen Ausführungsvarianten kann der Nahrungsmitteldrucker eine Heizeinrichtung und/oder eine Kühlvorrichtung, sowie einen thermisch an die Heizeinrichtung und/oder die Kühlvorrichtung gekoppelten Vorratsraum für Nahrungsmittelmasse aufweisen.

Im Falle eines Ausführungsbeispiels weist der Nahrungsmitteldrucker eine Kühlvorrichtung, sowie einen thermisch an die Kühlvorrichtung gekoppelten Vorratsraum für die Nahrungsmittelmasse auf. Es können mehrere verschiedene Nahrungsmittelmassen vorgesehen sein. Jede Art von Nahrungsmittelmasse kann in einer Kartusche enthalten sein. Mehrere, beispielsweise vier Kartuschen können ein Magazin in dem Vorratsraum bilden. Der Vorratsraum kann mit einem Deckel versehen sein, der geöffnet und geschlossen werden kann. In einer Offenstellung des Deckels können die Kartuschen ausgetauscht werden, d.h. leere Kartuschen herausgenommen und volle Kartuschen eingesetzt werden. In einer Schließstellung des Deckels kann der Vorratsraum auch thermisch gegen die Umgebung des Nahrungsmitteldruckers isoliert sein. Durch den mittels des Deckels verschließbaren Vorratsraums, der von der Kühlvorrichtung gekühlt werden kann, kann die Nahrungsmittelmasse, insbesondere können die Kartuschen unter die Erwärmungstemperatur und/oder unter die Gartemperatur in dem Vorratsraum gekühlt bevorratet werden.

Die Erfindung betrifft demgemäß außerdem einen Nahrungsmitteldrucker wie beschrieben, aufweisend eine Standvorrichtung, die ausgebildet ist, den Nahrungsmitteldrucker, insbesondere ein Gehäuse, welches der Nahrungsmitteldrucker aufweist, in einem solchen Abstand von einer Aufstandsfläche aufzustellen, derart, dass eine Austrittsdüse, weiche der Nahrungsmitteldrucker aufweist, von der Aufstandsfläche beabstandet und/oder unberührt bleibt. Die Standvorrichtung kann beispielsweise von bügelförmigen Standfüßen gebildet werden, welche sich entlang zweier gegenüberliegender unterer Seitenkanten des Gehäuses des Nahrungsmitteldruckers erstrecken. Die Standvorrichtung, insbesondere die bügelförmigen Standfüße können sich dabei parallel zu den Leisten erstrecken.

In allen Ausführungsvarianten kann der Nahrungsmitteldrucker ausgebildet und/oder eingerichtet sein, insbesondere eine Steuervorrichtung aufweisen, die ausgebildet und/oder eingerichtet ist, ein Verfahren wie beschrieben durchzuführen.

Ein konkretes Ausführungsbeispiel der Erfindung ist in der nachfolgenden Beschreibung unter Bezugnahme auf die beigefügten Figuren näher erläutert. Konkrete Merkmale dieses Ausführungsbeispiels können unabhängig davon, in welchem Zusammenhang sie erwähnt sind, gegebenenfalls auch einzeln oder in Kombination betrachtet, allgemeine Merkmale der Erfindung darstellen.

Es zeigen:
- Fig. 1: eine perspektivische schematische Darstellung eines beispielhaften erfindungsgemäßen Nahrungsmitteldruckers,
- Fig. 2: eine perspektivische schematische Darstellung des Nahrungsmitteldruckers gemäß Fig. 1 von unten mit Ansicht auf eine Nahrungsmittel-Austrittsdüse und eine erfindungsgemäße Lagervorrichtung,
- Fig. 3: eine perspektivische schematische Darstellung des Nahrungsmitteldruckers gemäß Fig. 1 mit einem geöffnet dargestellten erfindungsgemäßen Vorratsraum,
- Fig. 4: eine perspektivische schematische Darstellung eines Haushaltsbackofens, der Tragmittel aufweist, an denen der Nahrungsmitteldrucker gemäß Fig. 1 mittels seiner Lagervorrichtung innerhalb des Garraumes des Haushaltsbackofens gelagert ist; und
- Fig. 5: ein beispielhaftes Ablaufschema eines erfindungsgemäßen Verfahrensablaufs.

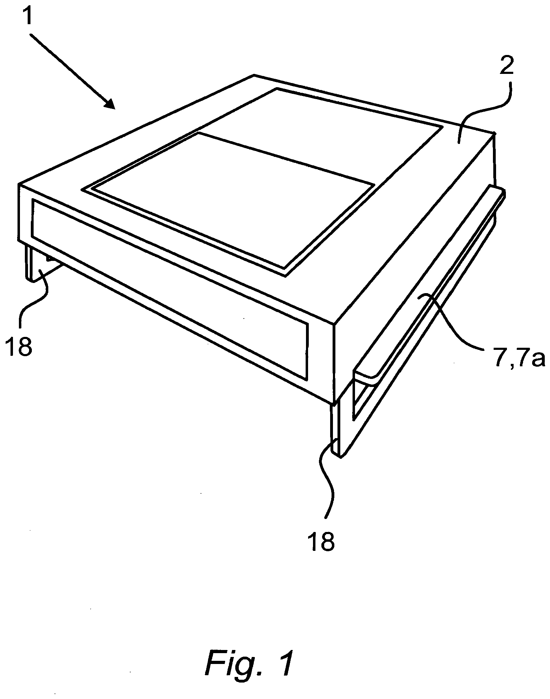

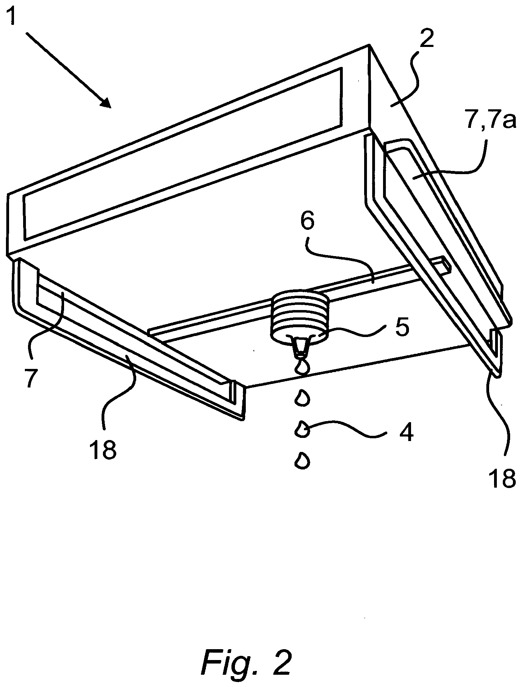

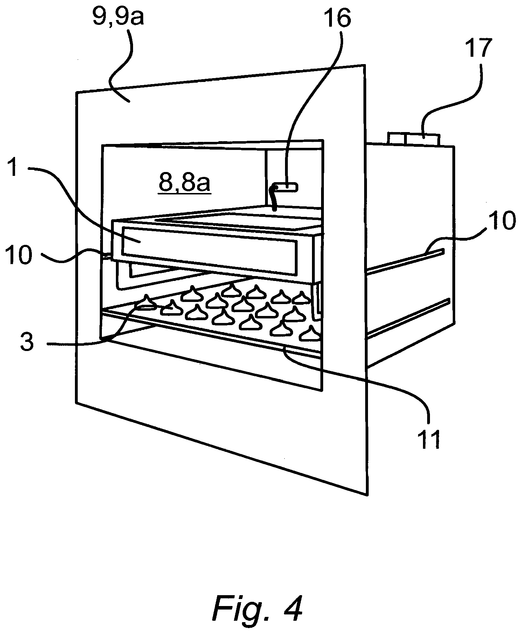

Ein in Fig. 1 schematisch dargestellter Nahrungsmitteldrucker 1 weist ein Gehäuse 2 auf. Der Nahrungsmitteldrucker 1 ist hinsichtlich seiner Grundfunktion des Druckens von Nahrungsmittelprodukten 3 (Fig. 4) aus einer Nahrungsmittelmasse 4 (Fig. 2) in einer dem Fachmann an sich bekannten Weise ausgebildet. Dazu weist der Nahrungsmitteldrucker 1 unter anderem eine Austrittsdüse 5 (Fig. 2) auf, die ausgebildet ist, die Nahrungsmittelmasse 4 gesteuert herauszufördern, um das Nahrungsmittelprodukt 3 zu formen. Die Austrittsdüse 5 ist mittels einer Stellvorrichtung 6 angesteuert in einer Ebene frei verstellbar.

Der Nahrungsmitteldrucker 1 weist eine erfindungsgemäße Lagervorrichtung 7 auf. Die Lagervorrichtung 7 ist im Falle des vorliegenden Ausführungsbeispiels ausgebildet, den Nahrungsmitteldrucker 1 in einem Behandlungsraum 8 (Fig. 4) eines Haushaltsgeräts 9, insbesondere in einem Garraum 8a eines Haushaltsbackofens 9a zu lagern. Die Lagervorrichtung 7 kann, wie dargestellt, an dem Gehäuse 2 ausgebildet sein. Insbesondere ist die Lagervorrichtung 7 an einer oder mehreren Außenwände des Gehäuses 2 befestigt oder einteilig mit diesen ausgebildet.

Die Lagervorrichtung 7 ist ausgebildet, den Nahrungsmitteldrucker 1 in dem Garraum 8a des Haushaltsbackofens 9a an seitlich gegenüberliegenden Tragmitteln 10 des Haushaltsbackofens 9a zu lagern. Die seitlich gegenüberliegenden Tragmittel 10 des Haushaltsbackofens 9a können durch die an sich bekannten Tragmittel 10 gebildet werden, welche nach dem Stand der Technik zur Aufnahme von Backblechen 11 (Fig.4) und/oder Einschubrosten ausgebildet sind. Die Tragmittel 10 können beispielsweise an gegenüberliegenden vertikalen Seitenwänden des Garraums 8a ausgebildete Nuten sein. Alternativ können die Tragmittel 10 von in den Garraum 8a vorspringenden separaten Bügeln gebildet werden, welche als separate Bauteile an den gegenüberliegenden vertikalen Seitenwänden des Garraums 8a befestigt sind.

Die Lagervorrichtung 7 kann, wie dargestellt, durch zwei Leisten 7a gebildet werden, die an gegenüberliegenden Seitenwänden des Gehäuses 2 angeordnet sind. Die Leisten 7a sind dabei ausgebildet, an die Tragmittel 10 des Haushaltsbackofens 9a angebracht, insbesondere in die Nuten eingeschoben oder auf die Bügel aufgeschoben zu werden. Die Lagervorrichtung 7 ermöglicht es somit den Nahrungsmitteldrucker 1 analog eines Backbleches 11 (Fig.4) und/oder Einschubrostes in den Garraum 8a einzuschieben. In einer in den Garraum 8a eingeschobenen Position des Nahrungsmitteldrucker 1 kann eine Garraumtür (nicht dargestellt) des Haushaltsbackofens 9a geschlossen werden, so dass der Haushaltsbackofen 9a in einer an sich bekannten Weise betrieben werden kann.

Im Falle des vorliegenden Ausführungsbeispiels des Haushaltsbackofens 9a weist der Nahrungsmitteldrucker 1 eine Kühlvorrichtung 12, sowie einen thermisch an die Kühlvorrichtung 12 gekoppelten Vorratsraum 13 für die Nahrungsmittelmasse 4 auf. Es können mehrere verschiedene Nahrungsmittelmassen 4 vorgesehen sein. Jede Art von Nahrungsmittelmasse 4 kann in einer Kartusche 14 enthalten sein. Die mehreren, im vorliegenden Ausführungsbeispiel vier Kartuschen 14 bilden ein Magazin in dem Vorratsraum 13. Der Vorratsraum 13 ist mit einem Deckel 15 versehen, der geöffnet und geschlossen werden kann. In einer Offenstellung des Deckels 15 können die Kartuschen 14 ausgetauscht werden, d.h. leere Kartuschen 14 herausgenommen und volle Kartuschen eingesetzt werden. In einer Schließstellung des Deckels 15 ist der Vorratsraum 13 auch thermisch gegen die Umgebung des Nahrungsmitteldruckers 1, insbesondere thermisch gegen den Garraum 8a isoliert.

Durch den mittels des Deckels 15 verschließbaren Vorratsraums 13, der von der Kühlvorrichtung 12 gekühlt werden kann, kann die Nahrungsmittelmasse 4, insbesondere können die Kartuschen 14 unter die Erwärmungstemperatur und/oder unter die Gartemperatur in dem Vorratsraum 13 gekühlt bevorratet werden.

Wenn die Nahrungsmittelmasse 4 dann aus der Austrittsdüse 5 austritt und/oder das Nahrungsmittelprodukt 3 beispielsweise auf das Backblech 11 aufgebracht worden ist, kann diese Nahrungsmittelmasse 4 und/oder das Nahrungsmittelprodukt 3 durch den Haushaltsbackofen zunächst auf eine unter der Gartemperatur des Nahrungsmittelprodukts 3 liegende Erwärmungstemperatur erwärmt werden.

Die Fig. 4 zeigt demgemäß ein Haushaltsgerät 9, insbesondere im Falle des vorliegenden Ausführungsbeispiel einen Haushaltsbackofen 9a. Das Haushaltsgerät 9 bzw. der Haushaltsbackofen 9a weist eine elektrische Schnittstelle 16 auf, die ausgebildet ist, den Nahrungsmitteldrucker 1 mit dem Haushaltsgerät 9, insbesondere dem Haushaltsbackofen 9a elektrisch zu verbinden, derart, dass der Nahrungsmitteldrucker 1 in einer im Behandlungsraum 8, d.h. dem Garraum 8a befindlichen Betriebsposition, wie dargestellt, über das Haushaltsgerät 9, insbesondere über den Haushaltsbackofen 9a mit elektrischer Energie zum Betreiben des Nahrungsmitteldruckers 1 versorgt ist und/oder derart, dass der Nahrungsmitteldrucker 1 in einer im Behandlungsraum 8 befindlichen Betriebsposition über den Haushaltsbackofen 9a, insbesondere dessen jeweiliger Gerätesteuerung 17 angesteuert ist.

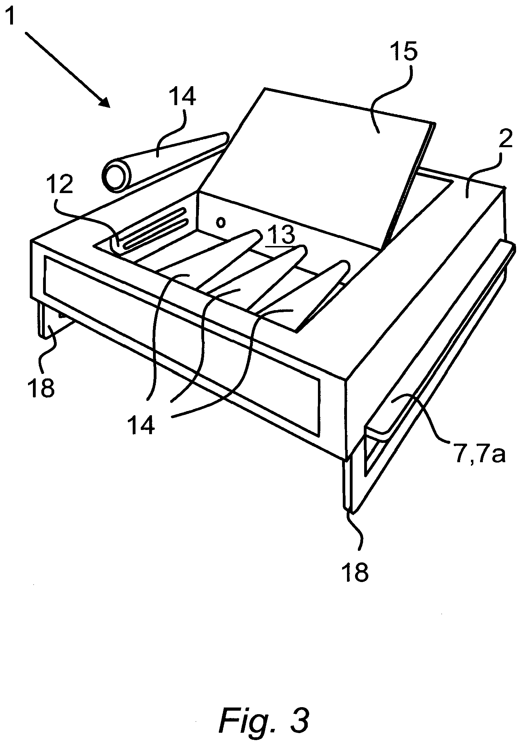

In dem in Fig. 1 bis Fig. 4 gezeigten Ausführungsbeispiel weist der Nahrungsmitteldrucker 1 außerdem eine Standvorrichtung 18 auf, die ausgebildet ist, den Nahrungsmitteldrucker 1, insbesondere das Gehäuse 2 in einem solchen Abstand von einer Aufstandsfläche aufzustellen, derart, dass die Austrittsdüse 5 von der Aufstandsfläche beabstandet und/oder unberührt bleibt. Die Standvorrichtung 18 wird im Falle des vorliegenden Ausführungsbeispiels von zwei bügelförmigen Standfüßen gebildet, welche sich entlang zweier gegenüberliegender unterer Seitenkanten des Gehäuses 2 erstrecken. Die Standvorrichtung 18, insbesondere die beiden bügelförmigen Standfüße erstrecken sich dabei parallel zu den Leisten 7a.

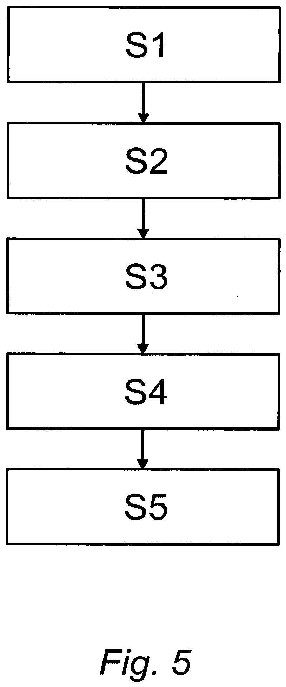

In der Fig. 5 ist ein beispielhaftes Ablaufschema eines erfindungsgemäßen Verfahrensablaufs schematisch dargestellt.

Bei dem Verfahren zum Betreiben des Nahrungsmitteldruckers1 erfolgt in einem ersten Schritt S1 ein Bereitstellen eines Haushaltsgeräts 9, das zur Behandlung, insbesondere zum Erwärmen, Erhitzen, Kühlen und/oder Gefrieren von Nahrungsmitteln ausgebildet ist und das einen dazu eingerichteten Behandlungsraum 8 für Nahrungsmittel aufweist.

In einem zweiten Schritt S2 erfolgt ein Ausstatten des Nahrungsmitteldruckers 1 mit einer zu behandelnden Nahrungsmittelmasse 4.

Anschließend wird im Schritt S3 der Nahrungsmitteldrucker in den Behandlungsraum 8 des Haushaltsgeräts 9 positioniert.

Nun erfolgt im Schritt S4 ein Vorformen eines Nahrungsmittelproduktes 3 aus der Nahrungsmittelmasse 4 durch den Nahrungsmitteldrucker 1 in dem Behandlungsraum 8.

Bereits während des Schrittes S4 oder nach dem Schritt S4 erfolgt ein Betreiben des Haushaltsgeräts 9 zur Behandlung der Nahrungsmittelmasse 4 und/oder des Nahrungsmittelproduktes 3 während und/oder nachdem das Nahrungsmittelprodukt 3 aus der Nahrungsmittelmasse 4 in dem Behandlungsraum 8 des Haushaltsgeräts 9 durch den Nahrungsmitteldrucker 1 vorgeformt wird/ist.

### BEZUGSZEICHENLISTE

- 1: Nahrungsmitteldrucker
- 2: Gehäuse
- 3: Nahrungsmittelprodukt
- 4: Nahrungsmittelmasse
- 5: Austrittsdüse
- 6: Stellvorrichtung
- 7: Lagervorrichtung
- 7a: Leisten
- 8: Behandlungsraum
- 8a: Garraum
- 9: Haushaltsgerät
- 9a: Haushaltsbackofen
- 10: Tragmittel
- 11: Backblech
- 12: Kühlvorrichtung
- 13: Vorratsraum
- 14: Kartusche
- 15: Deckel
- 16: elektrische Schnittstelle
- 17: Gerätesteuerung
- 18: Standvorrichtung

## Patentansprüche

1. Verfahren zum Betreiben eines Nahrungsmitteldruckers (1) aufweisend die Schritte:
- Bereitstellen eines Haushaltsgeräts (9), das zur Behandlung, insbesondere zum Erwärmen, Erhitzen, Kühlen und/oder Gefrieren von Nahrungsmitteln ausgebildet ist und das einen dazu eingerichteten Behandlungsraum (8) für Nahrungsmittel aufweist,
- Ausstatten des Nahrungsmitteldruckers (1) mit einer zu behandelnden Nahrungsmittelmasse (4),
- Positionieren des Nahrungsmitteldruckers (1) in den Behandlungsraum (8) des Haushaltsgeräts (9),
- Vorformen eines Nahrungsmittelproduktes (3) aus der Nahrungsmittelmasse (4) durch den Nahrungsmitteldrucker (1) in dem Behandlungsraum (8),
- Betreiben des Haushaltsgeräts (9) zur Behandlung der Nahrungsmittelmasse (4) und/oder des Nahrungsmittelproduktes (3) während und/oder nachdem das Nahrungsmittelprodukt (3) aus der Nahrungsmittelmasse (4) in dem Behandlungsraum (8) des Haushaltsgeräts (9) durch den Nahrungsmitteldrucker (1) vorgeformt wird/ist.

2. Verfahren nach Anspruch 1, **dadurch gekennzeichnet, dass** das Haushaltsgerät (9) ein Haushaltsbackofen (9a), insbesondere ein elektrischer Haushaltsbackofen (9a) ist und die Nahrungsmittelmasse (4) und/oder das Nahrungsmittelprodukt (3) durch den Haushaltsbackofen (9a) auf eine unter der Gartemperatur des Nahrungsmittelprodukts (3) liegende Erwärmungstemperatur erwärmt wird.

3. Verfahren nach Anspruch 2, **dadurch gekennzeichnet, dass** die Nahrungsmittelmasse (4) in einem unter die Erwärmungstemperatur und/oder unter die Gartemperatur gekühlten Vorratsraum (13), insbesondere einem gekühlten Vorratsraum (13) des Nahrungsmitteldruckers (1) bevorratet wird.

4. Verfahren nach Anspruch 1, **dadurch gekennzeichnet, dass** das Haushaltsgerät (9) ein Haushaltskältegerät ist und die Nahrungsmittelmasse (4) und/oder das Nahrungsmittelprodukt (3) durch das Haushaltskältegerät auf eine unter der Umgebungstemperatur liegende Kühltemperatur und/oder Gefriertemperatur gekühlt wird.

5. Verfahren nach Anspruch 4, **dadurch gekennzeichnet, dass** die Nahrungsmittelmasse (4) in einem über die Gefriertemperatur und/oder über die Kühltemperatur, insbesondere über die Umgebungstemperatur erwärmten Vorratsraum (13), insbesondere einem erwärmten Vorratsraum (13) des Nahrungsmitteldruckers (1) bevorratet wird.

6. Haushaltsgerät (9), insbesondere Haushaltsbackofen (9a) und/oder Haushaltskältegerät, aufweisend einen Behandlungsraum (8) und einen darin mittels einer entsprechend ausgebildeten Lagervorrichtung (7) gelagerten Nahrungsmitteldrucker (1), sowie eine elektrische Schnittstelle (16), die ausgebildet ist, den Nahrungsmitteldrucker (1) mit dem Haushaltsgerät (9) elektrisch zu verbinden, derart, dass der Nahrungsmitteldrucker (1) in einer im Behandlungsraum (8) befindlichen Betriebsposition über das Haushaltsgerät (9) mit elektrischer Energie zum Betreiben des Nahrungsmitteldruckers (1) versorgt ist und/oder derart, dass der Nahrungsmitteldrucker (1) in einer im Behandlungsraum (8) befindlichen Betriebsposition über den Haushaltsbackofen (9a) und/oder über das Haushaltskältegerät, insbesondere dessen jeweiliger Gerätesteuerung (17) angesteuert ist, wobei das Haushaltsgerät (9) und der Nahrungsmitteldrucker (1) eingerichtet sind zur Durchführung eines Verfahrens gemäß einem der Ansprüche 1 bis 5.

7. Haushaltsgerät (9) und Nahrungsmitteldrucker (1) nach Anspruch 6, **dadurch gekennzeichnet, dass** die Lagervorrichtung (7) ausgebildet ist, den Nahrungsmitteldrucker (1) in dem Garraum (8a) des Haushaltsbackofens (9a) an seitlich gegenüberliegenden Tragmitteln (10) des Haushaltsbackofens (9a) zu lagern, die zur Aufnahme von Backblechen (11) und/oder Einschubrosten ausgebildet sind.

8. Haushaltsgerät (9) und Nahrungsmitteldrucker (1) nach Anspruch 6 oder 7, **dadurch gekennzeichnet, dass** die Lagervorrichtung (7) ausgebildet ist, den Nahrungsmitteldrucker (1) in dem Kälteraum des Haushaltskältegeräts an seitlich gegenüberliegenden Tragmitteln (10) des Haushaltskältegeräts zu lagern, die zur Aufnahme von Kühlgut-Fachböden und/oder Gefrierschubladen ausgebildet sind.

9. Haushaltsgerät (9) und Nahrungsmitteldrucker (1) nach einem der Ansprüche 6 bis 8, **dadurch gekennzeichnet, dass** der Nahrungsmitteldrucker (1) eine Heizeinrichtung und/oder eine Kühlvorrichtung (12), sowie einen thermisch an die Heizeinrichtung und/oder die Kühlvorrichtung (12) gekoppelten Vorratsraum (13) für Nahrungsmittelmasse (4) aufweist.

10. Haushaltsgerät (9) und Nahrungsmitteldrucker (1) nach einem der Ansprüche 6 bis 9, aufweisend eine Standvorrichtung (18), die ausgebildet ist, den Nahrungsmitteldrucker (1), insbesondere ein Gehäuse (2), welches der Nahrungsmitteldrucker (1) aufweist, in einem solchen Abstand von einer Aufstandsfläche aufzustellen, derart, dass eine Austrittsdüse (5), welche der Nahrungsmitteldrucker (1) aufweist, von der Aufstandsfläche beabstandet und/oder unberührt bleibt.

## Claims

1. Method for operating a food printer (1), having the following steps:
- Provision of a domestic appliance (9), which is embodied for treating, especially for warming up, heating, cooling and/or freezing of food and which has a treatment compartment (8) for food configured for this purpose,
- Equipping the food printer (1) with a food mass (4) to be treated,
- Positioning the food printer (1) in the treatment compartment (8) of the domestic appliance (9),
- Pre-shaping of a food product (3) from the food mass (4) by the food printer (1) in the treatment compartment (8),
- Operation of the domestic appliance (9) for treating the food mass (4) and/or the food product (3) during and/or after the food product (3) will be/is pre-shaped from the food mass (4) by the food printer (1) in the treatment compartment (8) of the domestic appliance (9).

2. Method according to claim 1, **characterised in that** the domestic appliance (9) is a domestic oven (9a), in particular an electric domestic oven (9a), and the food mass (4) and/or the food product (3) will be heated up by the domestic oven (9a) to a heating temperature lying below the cooking temperature of the food product (3).

3. Method according to claim 2, **characterised in that** the food mass (4) will be stored in a storage compartment (13) cooled to below the heating temperature and/or to below the cooking temperature, in particular a cooled storage compartment (13) of the food printer (1).

4. Method according to claim 1, **characterised in that** the domestic appliance (9) is a domestic refrigerator and the food mass (4) and/or the food product (3) will be cooled by the domestic refrigerator to a cooling temperature and/or freezing temperature lying below the ambient temperature.

5. Method according to claim 4, **characterised in that** the food mass (4) will be stored in a storage compartment (13) heated to above the freezing temperature and/or the cooling temperature, especially to above the ambient temperature, especially in a heated storage compartment (13) of the food printer (1).

6. Domestic appliance (9), in particular a domestic oven (9a) and/or domestic refrigerator, having a treatment compartment (8) and a food printer (1) mounted therein by means of a correspondingly embodied mounting apparatus (7), as well as an electrical interface (16), which is embodied to connect the food printer (1) electrically to the domestic appliance (9), such that, when located in an operating position in the treatment compartment (8), the food printer (1) is supplied with electrical energy for operating the food printer (1) via the domestic appliance (9) and/or such that, when located in an operating position in the treatment compartment (8), the food printer (1) is controlled via the domestic oven (9a) and/or via the domestic refrigerator, especially via its respective device controller (17), wherein the domestic appliance (9) and the food printer (1) are configured to carry out a method according to one of claims 1 to 5.

7. Domestic appliance (9) and food printer (1) according to claim 6, **characterised in that** the mounting apparatus (7) is embodied for mounting the food printer (1) in the treatment compartment (8a) of the domestic oven (9a) on laterally opposite bearer means (10) of the domestic oven (9a), which are embodied for receiving baking sheets (11) and/or slide-in oven shelves.

8. Domestic appliance (9) and food printer (1) according to claim 6 or 7, **characterised in that** the mounting apparatus (7) is embodied for mounting the food printer (1) in the refrigeration compartment of the domestic refrigerator on laterally opposite bearer means (10) of the domestic refrigerator, which are embodied for receiving refrigerated goods shelves and/or freezer drawers.

9. Domestic appliance (9) and food printer (1) according to one of claims 6 to 8, **characterised in that** the food printer (1) has a heating device and/or a cooling device (12) as well as a storage compartment (13) for food mass (4) thermally coupled to the heating device and/or the cooling device (12).

10. Domestic appliance (9) and food printer (1) according to one of claims 6 to 9, having a stand facility (18), which is embodied to place the food printer (1), especially a housing (2) that has the food printer (1), at a distance from a surface on which it is standing such that a dispensing nozzle (5) that has the food printer (1) is spaced at a distance from the surface and/or remains untouched.

## Revendications

1. Procédé d'exploitation d'une imprimante alimentaire (1) comprenant les étapes suivantes :
- mise à disposition d'un appareil ménager (9) exécuté afin de traiter, en particulier de chauffer, de cuire, de réfrigérer et/ou de congeler des aliments et qui présente un espace de traitement (8) pour denrées alimentaires aménagé à cet effet,
- chargement d'une masse de denrée alimentaire (4) à traiter dans l'imprimante alimentaire (1),
- positionnement de l'imprimante alimentaire (1) dans l'espace de traitement (8) de l'appareil ménager (9),
- préformage d'un produit alimentaire (3) au départ de la masse de denrée alimentaire (4) par l'imprimante alimentaire (1) dans l'espace de traitement (8),
- exploitation de l'appareil ménager (9) pour le traitement de la masse de denrée alimentaire (4) et/ou du produit alimentaire (3) pendant que et/ou après que le produit alimentaire (3) est préformé au départ de la masse de denrée alimentaire (4) dans l'espace de traitement (8) de l'appareil ménager (9) par l'imprimante alimentaire (1).

2. Procédé selon la revendication 1, **caractérisé en ce que** l'appareil ménager (9) est un four ménager (9a), en particulier un four ménager électrique (9a) et la masse de denrée alimentaire (4) et/ou le produit alimentaire (3) est chauffé par le four ménager (9a) à une température de chauffe inférieure à la température de cuisson du produit alimentaire (3).

3. Procédé selon la revendication 2, **caractérisé en ce que** la masse de denrée alimentaire (4) est stockée dans un espace de stockage (13) réfrigéré sous la température de chauffe et/ou sous la température de cuisson, en particulier dans un espace de stockage (13) réfrigéré de l'imprimante alimentaire (1).

4. Procédé selon la revendication 1, **caractérisé en ce que** l'appareil ménager (9) est un appareil frigorifique ménager et la masse de denrée alimentaire (4) et/ou le produit alimentaire (3) est réfrigéré par l'appareil frigorifique ménager à une température de réfrigération et/ou à une température de congélation inférieure à la température ambiante.

5. Procédé selon la revendication 4, **caractérisé en ce que** la masse de denrée alimentaire (4) est stockée dans un espace de stockage (13) chauffé au-delà la température de réfrigération et/ou au-delà de la température de congélation, en particulier au-delà de la température ambiante, en particulier dans un espace de stockage (13) chauffé de l'imprimante alimentaire (1).

6. Appareil ménager (9), en particulier four ménager (9a) et/ou appareil frigorifique ménager, présentant un espace de traitement (8) et une imprimante alimentaire (1) y logée au moyen d'un dispositif de stockage (7) exécuté en conséquence, ainsi qu'une interface électrique (16), exécutée afin de relier électriquement l'imprimante alimentaire (1) à l'appareil ménager (9), de telle sorte que l'imprimante alimentaire (1) est, dans une position d'exploitation se trouvant dans l'espace de traitement (8), alimentée en énergie électrique pour l'exploitation de l'imprimante alimentaire (1) via l'appareil ménager (9) et/ou de telle sorte que l'imprimante alimentaire (1) est, dans une position d'exploitation se trouvant dans l'espace de traitement (8), commandée via le four ménager (9a) et/ou via l'appareil frigorifique ménager, en particulier sa commande d'appareil (17), dans lequel l'appareil ménager (9) et l'imprimante alimentaire (1) sont aménagés afin d'exécuter un procédé selon l'une des revendications 1 à 5.

7. Appareil ménager (9) et imprimante alimentaire (1) selon la revendication 6, **caractérisé en ce que** le dispositif de stockage (7) est constitué afin de loger l'imprimante alimentaire (1) dans l'espace de cuisson (8a) du four ménager (9a) sur des moyens de support (10) latéraux opposés (10) du four ménager (9a) exécutés afin de recevoir des plaques de four (11) et/ou des grilles amovibles.

8. Appareil ménager (9) et imprimante alimentaire (1) selon la revendication 6 ou 7, **caractérisé en ce que** le dispositif de stockage (7) est constitué afin de loger l'imprimante alimentaire (1) dans l'espace réfrigéré de l'appareil frigorifique ménager sur des moyens de support (10) latéraux opposés (10) de l'appareil frigorifique ménager exécutés afin de recevoir des tablettes à denrées à réfrigérer et/ou des tiroirs de congélation.

9. Appareil ménager (9) et imprimante alimentaire (1) selon l'une des revendications 6 à 8, **caractérisé en ce que** l'imprimante alimentaire (1) présente un dispositif de chauffe et/ou un dispositif de réfrigération (12) ainsi qu'un espace de stockage (13) pour la masse de denrée alimentaire (4) couplé thermiquement au dispositif de chauffe et/ou au dispositif de réfrigération (12).

10. Appareil ménager (9) et imprimante alimentaire (1) selon l'une des revendications 6 à 9, présentant un dispositif de support (18) exécuté afin de disposer l'imprimante alimentaire (1), en particulier un bâti (2) présentant l'imprimante alimentaire (1), à l'écart d'une surface d'appui de sorte qu'une buse de sortie (5) que l'imprimante alimentaire présente (1) soit à l'écart de la surface d'appui et/ou demeure hors de contact de celle-ci.
